# EUROPEAN PATENT APPLICATION

(11) **EP 2 902 955 A1**
(43) Date of publication of application: **05.08.2015**
(21) Application number: 15151225.8
(22) Date of filing: 15.01.2015
(51) Int. Cl.: G06Q 30/02, G06Q 30/06

(54) **Technique for navigating between points of interest offering promotions**

(30) Priority: 16.01.2014 US 201414157476
(71) Applicant: Harman International Industries, Inc., Stamford, CT 06901 (US)
(72) Inventor: Baid, Sneha, Stamford, CT 06901 (US)
(74) Representative: Bertsch, Florian Oliver

(57) **Abstract**

A navigation system is configured to plot a route through a shopping area that visits various stores offering specific types of promotions. A user of the navigation system first selects a desired promotion, including a discount level, among other possibilities. Then, the user selects a category of store where the user wishes to shop. The navigation system then identifies nearby stores offering the desired promotion that fall within the selected category, and plots a route that visits each identified store. The route may traverse from the current location of the user to a final destination, or may represent a circuit with collocated starting and ending positions.

## Description

### BACKGROUND

### Field of the Embodiments of the Invention

Embodiments of the present invention relate generally to navigation assistance and, more specifically, to technique for navigating between points of interest offering promotions.

### Description of the Related Art

As society grows, commerce expands to meet the needs of an increasing population. Vast shopping districts, extensive malls, and scattered business alike now occupy immense portions of cities, states, and countries as a whole. Consumers now have access to a wide array of stores that offer a spectrum of goods and services. Those stores oftentimes offer similar goods and services, and, therefore, typically must compete with one another to attract consumers.

One competitive strategy stores commonly employ in the context of trade is to offer promotions, such as discounts. A store may offer a discount by reducing the price of a given item or class of items compared to the price of the same item(s) at other stores. Thus, consumers are inclined to shop at the store offering the discount (and not the other stores offering higher prices). Stores may offer a wide range of other promotions as well, each of which is typically designed to incentivize consumers into purchasing the item(s) being promoted at the store offering the promotion.

Stores have successfully implemented the strategy discussed above for ages. However, with the ever-increasing size of shopping areas, the degree to which consumers can locate stores offering promotions continues to decline. Consequently, consumers oftentimes cannot locate bargains and end up paying premium prices for items offered by other stores at lower prices. For example, suppose a consumer wishes to buy a pair of shoes at a nearby shoe store. Unbeknownst to the consumer, another shoe store, just a few blocks from the nearby shoe store, is offering shoes at a discounted rate, say 50% off. Since the consumer is unaware that the other shoe store even exists, the consumer would simply buy the shoes at the nearby shoe store, and could potentially end up paying double for the same pair of shoes.

As the foregoing illustrates, what would be useful is a way to provide consumers with the information necessary to acquire goods and service at the best possible prices to enable shopping in a more cost-effective manner.

### SUMMARY

One embodiment of the present invention sets forth a computer-implemented method for directing a user to stores that offer promotions, including receiving from the user a selection of a class of promotions, determining a set of vendors offering promotions that falls within the class of promotions, generating a set of instructions that direct the user along a route that passes proximate to each vendor in the set of vendors, and outputting the set of instructions to the user.

A further embodiment relates to a system including a processing unit which is configured to carry out one or several of the method steps mentioned above or below.

One advantage of the disclosed techniques is that valuable promotions for desired items may be automatically located without requiring the user to physically hunt for those promotions.

### BRIEF DESCRIPTION OF THE SEVERAL VIEWS OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Each of the features described above or below may be used in the described context. However, it may also be used alone or in combination with any of the features described above or below.
Figures 1A-1C illustrate a navigation system configured to implement one or more aspects of embodiments of the present invention;
Figures 2A-2B illustrate exemplary graphical user interface (GUI) elements that the navigation system of Figures 1A-1C may be configured to generate, according to various embodiments of the present invention;
Figure 3 is a flow diagram of method steps for plotting a route across different points of interest (POIs) offering specific promotions, according to various embodiments of the present invention; and
Figure 4 illustrates an implementation of the navigation system of Figures 1A-1C, according to various embodiments of the present invention.

### DETAILED DESCRIPTION

In the following description, numerous specific details are set forth to provide a more thorough understanding of the present invention. However, it will be apparent to one of skill in the art that the present invention may be practiced without one or more of these specific details.

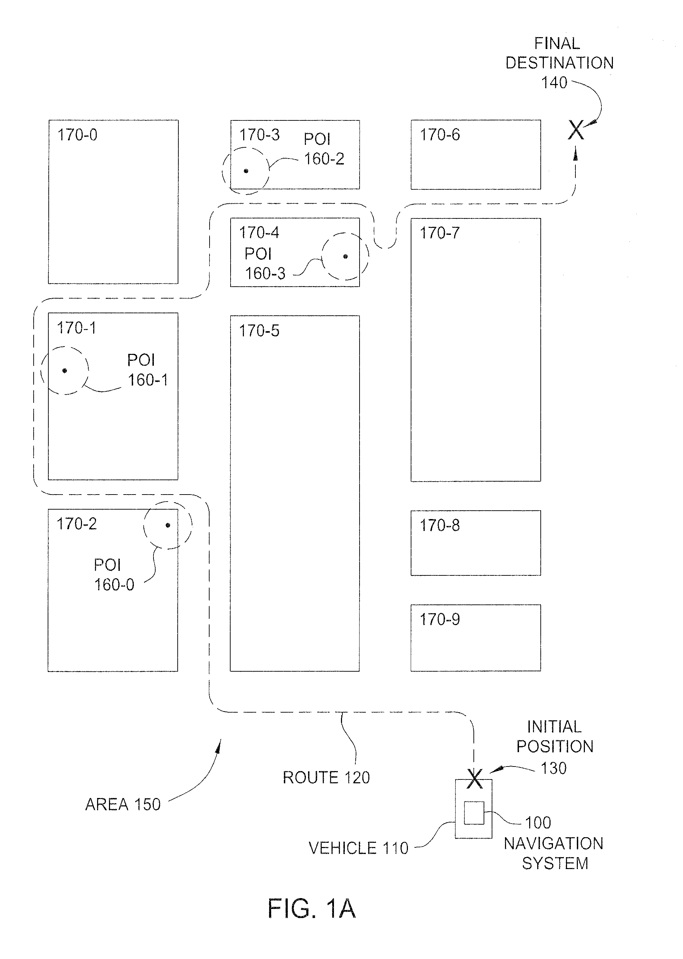

Figures 1A illustrates a navigation system configured to implement one or more aspects of embodiments of the present invention. As shown, a navigation system 100 resides within a vehicle 110. Navigation system 100 is configured to generate a route 120 that ranges between an initial position 130 and a final destination 140. Route 120 delineates a course of travel through an area 150 proximate to various points of interest (POIs) 160-0 through 160-3. POIs 160 may be businesses, stores, vendors, or other suppliers of goods and services located within area 150. Area 150 may be a shopping center, a shopping district, or a generic area that is traversable by vehicle 110 or traversable via any other means of travel. POIs 160 reside within buildings 170, as is shown. Buildings 170-0 through 170-9 may be different stores within a shopping center, separate structures within a shopping district, or different shopping malls within a city, among other possibilities.

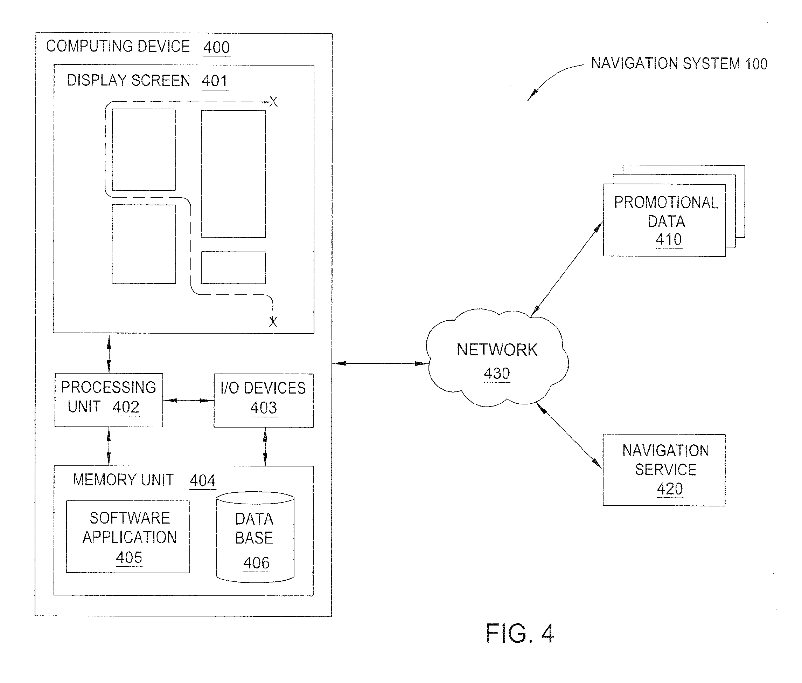

Navigation system 100 generally includes a computing device configured to generate instructions that direct a user of navigation system 100 along route 120 from initial position 130 to final destination 140. An exemplary computing device configured to implement the functionality of navigation system 100 is described in greater detail below in conjunction with Figure 4. Navigation system 100 is configured to access global positioning system (GPS) services and/or other position-based services in order to generate route 120. In addition, navigation system 100 is also configured to acquire data that reflects various promotions currently offered by POIs 160 in the vicinity of navigation system 100, and to generate route 120 to travel proximate to a selection of those POIs 160. Accordingly, when the user of navigation system 100 travels along route 120, the user may visit the selected POIs and benefit from the promotions offered by those POIs 160. Navigation system 100 may also simply display POIs 160 to the user without generating or displaying route 120.

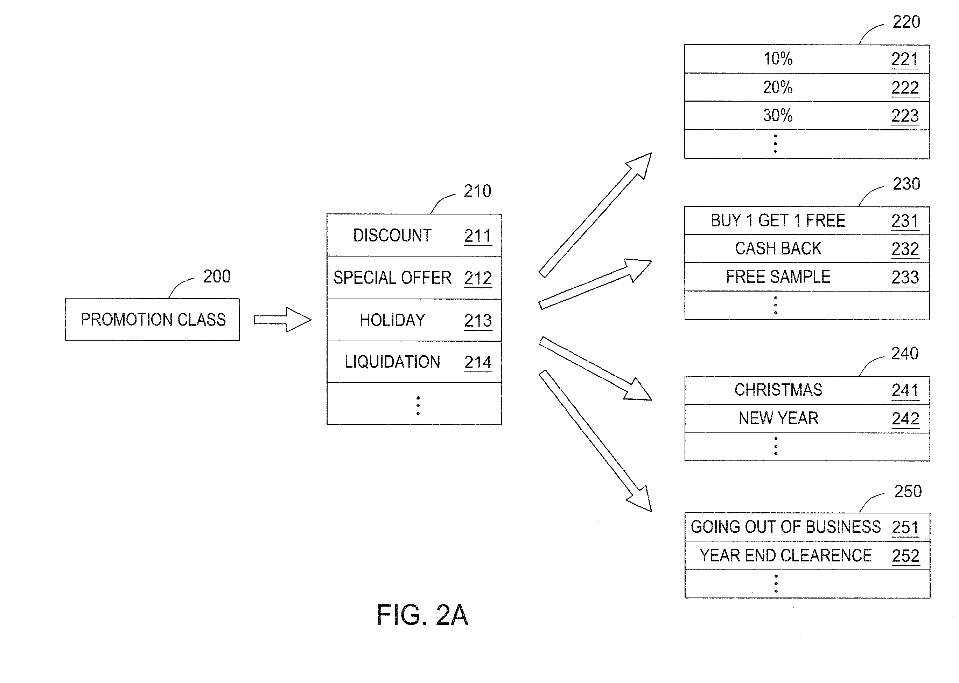

In operation, the user of navigation system 100 interacts with navigation system 100 in order to specify a class of promotion on which the driver wishes to capitalize. A promotion class could be, for example, and without limitation, a "discount"-type promotion and an associated discount level. The discount level could be 10%, 20%, 30%, and so forth. Alternatively, the promotion class could be a "special offer"-type discount, such as "buy one get one free" or "cash back," among other possibilities. Further, the promotion class could be a "holiday" type discount associated with a particular holiday, or a "liquidation"-type promotion intended to liquidate inventory held by a given POI 160. The various promotion classes mentioned by way of example herein are also discussed in greater detail below in conjunction with Figure 2A. Generally, in the context of this disclosure, a "promotion" may refer to any advertisement or other communication intended to attract customers to a vendor.

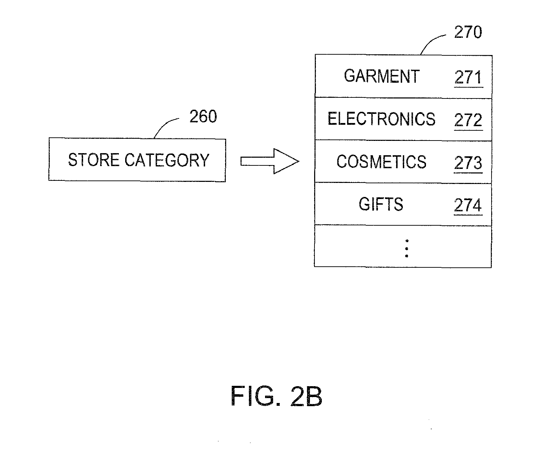

Once the user of navigation system 100 has selected the promotion class, the user indicates a particular category of POI 160 they wish to visit. The category of POI 160 generally reflects a type of item that the POI 160 offers for sale. For example, and without limitation, a POI 160 associated with a "garment" category would sell garments. POIs 160 could fall within a "garment" category, an "electronics" category, a "cosmetics" category, a "gifts" category, among other examples of categories, without limitation. A given POI 160 may also fall within multiple categories as well, and may be identifiable based on any one of those multiple categories. The various POI categories mentioned by way of example herein are also discussed in greater detail below in conjunction with Figure 2B.

Upon determining the promotion class and POI category based on user input, as described above, navigation system 100 then identifies POIs 160 in the vicinity of navigation system 100 that (i) offer the selected class of promotion and (ii) fall within the specified POI category. Navigation system 100 could, for example, and without limitation, establish a set of all POIs 160 offering the selected class of promotion, and then narrow that set by removing POIs 160 that do not fall within the selected POI category. Navigation system 100 may rely on cloud-based services to determine POIs 160 offering promotions, and may parse data provided by those services to identify particular POIs 160 offering the selected class of promotion. For example, and without limitation, navigation system 100 could access a web page associated with a given POI 160 and parse text associated with the web page to identify various promotions offered by the given POI. In addition, navigation system 100 may execute a third-party application to acquire information related to POIs 160 and promotions offered by those POIs. Navigation system 100 may also maintain "favorite" POIs 160 selected by the user and then recommend other similar POIs 160 based on information gathered from the Internet or acquired through a third-party application such as that mentioned above. Navigation system 160 may also receive information from other devices associated with the user, such as a cell phone configured to record POI-related information. For example, and without limitation, navigation system 100 could parse short message service (SMS) messages to acquire promotion data.

Navigation system 100 then generates route 120 to visit the identified POIs 160. Navigation system 100 could display a map to the user of navigation system 100, where that map resembles Figure 1A, for example, and without limitation. Alternatively, navigation system 100 could display text that represents a set of instructions that direct the user along route 120 or generate audio that reflects those instructions. In doing so, navigation system 100 may also audibly list the promotions offered by a nearby POI 160 along route 120, as well as any other information associated with POIs 160. Further, navigation system 100 may list information associated with POIs 160 that are not explicitly associated with route 120.

In one embodiment, navigation system 100 may prioritize POIs 160 along route 120 based on preferences associated with the user. For example, and without limitation, navigation system 100 could store a set of preferences that indicate that the user prefers to shop at a particular type of store. Navigation system 100 would then generate route 120 to visit that particular type of store first, before other types of stores are visited. As a general matter, navigation system 100 may reorder the set of acquired POIs 160 based on any prioritization mechanism. In addition, when those POIs 160 are not explicitly plotted within route 120, navigation system 100 may simply rearrange the order in which those POIs are presented to the user.

During navigation of route 120, navigation system 100 is configured to monitor the amount of time that the user of navigation system 100 has spent shopping, and to periodically prompt the user based on the amount of time that has elapsed. Navigation system 100 may generate a user prompt to determine whether additional shopping is planned or, alternatively whether the user intends to abandon route 120. Navigation system 100 could prompt the user in the aforementioned fashion when a threshold amount of time has passed without the user visiting a POI 160 along route 120, among other possibilities, and without limitation. Navigation system 100 may establish the threshold amount of time by averaging the time spent at previous POIs 160.

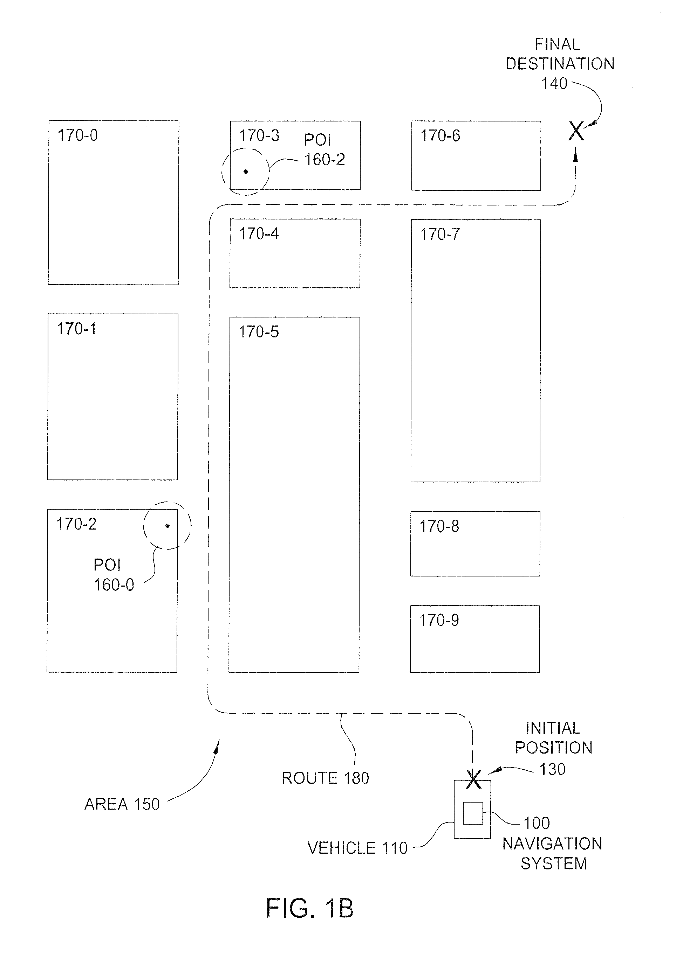

Navigation system 100 may also receive additional input from the user that reflects user preferences, and so forth, during navigation of the route 120. For example, the user of navigation system 100 may interact with navigation system 100 to eliminate certain POIs 160 from route 120 at any time, thereby causing navigation system 100 to generate an adjusted version of route 120, as described in greater detail below in conjunction with Figure 1B.

Figure 1B illustrates a route 180 through area 150 that visits a subset of POIs 160 shown in Figure 1A, according to various embodiments of the present invention. As shown, route 180 travels proximate to POIs 160-0 and 160-2 and does not travel proximate to POIs 160-1 or 160-3 of Figure 1A. The user of navigation system 100 could have, for example, and without limitation, explicitly removed those POIs from route 120, thereby triggering navigation system 100 to adjust route 120 to generate route 180. Alternatively, the user could have altered the selection of promotion class or POI category, similarly triggering navigation system 100 to adjust route 120 to generate route 180.

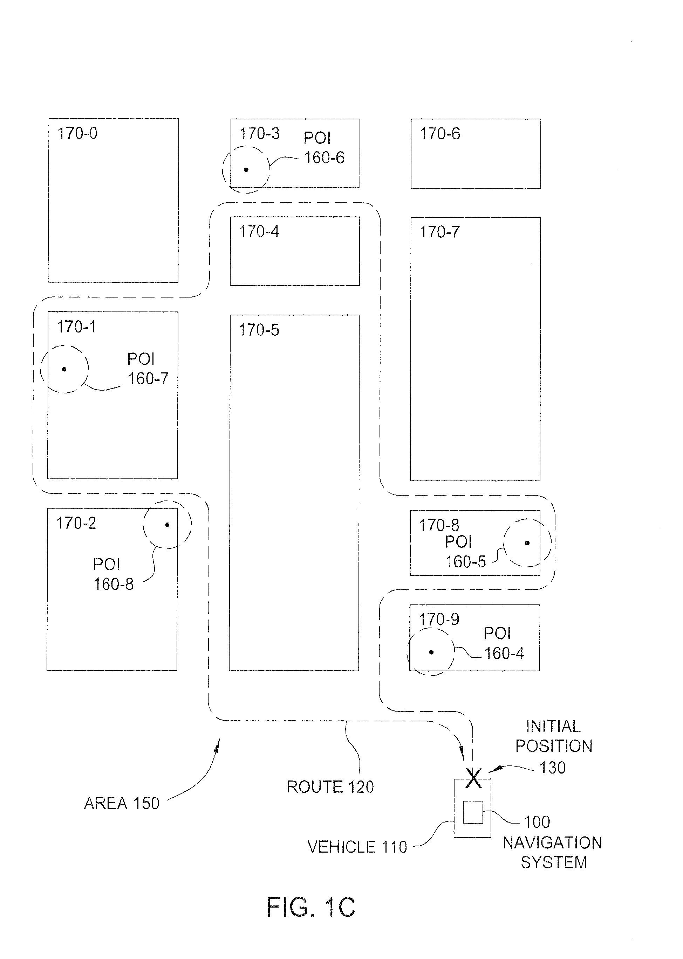

Referring generally to Figures 1A-1B, route 120 delineates a course from initial position 130 to final destination 140, where final destination 140 represents a preferred termination point of route 120. The user of navigation system 100 could specify final destination 140 by providing navigation system 100 with an address or set of coordinates to which the user wishes to travel (by way of POIs 160). Navigation system 100 may also automatically select final destination 140, e.g., based on user preferences, among other possibilities and without limitation. Navigation system 100 may also generate circuitous routes through area 150 that visit a selection of POIs 160, and then return the user back to initial position 130, as described in greater detail below in conjunction with Figure 1C.

Figure 1C illustrates a route 190 that visits POIs 160-4 through 160-8, according to various embodiments of the present invention. As shown, route 190 traces a circuitous path through area 150 that visits a set of POIs 160 and returns the user of navigation system 100 to initial position 130. Navigation system 100 may generate the set of POIs 160-4 through 160-8 by performing the techniques described above in conjunction with Figures 1A-1B. When generating routes that return the user back to an initial position, navigation system 100 may operate in a particular mode where a final destination is not explicitly required.

Referring generally to Figures 1A-1C, when navigation system 100 generates routes that visit a set of POIs 160, navigation system 100 may automatically filter a candidate set of POIs based on a wide variety of criteria other than the promotion class and POI category criteria discussed above. For example, navigation system 100 may limit the candidate set of POIs based on a maximum allowable distance between POIs in the route, a maximum amount of time needed to traverse the entire route, an amount of traffic between POIs, and other characteristics related to the route itself. In general, navigation system 100 may implement any technically feasible approach to generating routes that would also be applicable to the classic "traveling salesman" problem. Specifically, navigation system 100 may implement any known approach to generating a set of navigation instructions that visit any number of waypoints with a minimum amount of travel. In addition, navigation system 100 may limit the candidate set of POIs based on criteria related to the POIs themselves, including store hours, store size, difficulty of parking, and so forth.

Further, navigation system 100 may generate different sets of POIs 160 and display those different sets to the user. Specifically, navigation system 100 may be configured to generate a first set of POIs that reflects a given store type and promotion class, and then generate a second set of POIs that reflects a different store type and promotion class. The two sets of POIs generally reflect different selections provided by the user. Navigation system 100 may then display both sets to the user simultaneously. In one embodiment of the present invention, navigation system 100 color-codes those different sets to distinguish each POI as belonging to a particular set. Navigation system 100 may also plot routes that visit any or all POIs within a given set, or generate a single route that visits all POIs 160 across both sets.

Persons skilled in the art will recognize that although the techniques described in conjunction with Figure 1A are discussed relative to a user of navigation system 100 that drives vehicle 110, any of the techniques discussed hereinbefore and hereinafter are also applicable to a user of navigation system 100 traveling via any other means. In particular, a user of navigation system 100 benefit from the functionality of navigation system 100 when traveling via bicycle, bus, motorcycle, as well as walking or running on foot. As a general matter, the type of transportation mechanism discussed in the context of this disclosure is not meant to limit the scope of navigation system 100 itself in any way.

Navigation system 100 may interact with the user of navigation system 100 through a wide variety of different possible techniques, including, but not limited to, visual interfaces, gestural user interfaces, voice user interfaces, tactile user interfaces, and so forth. However, exemplary GUI elements that navigation system 100 may generate and display on a display screen in order to acquire the promotion class and POI category are described in greater detail below in conjunction with Figures 2A-2B.

Figures 2A illustrates exemplary GUI elements that the navigation system of Figures 1A-1C may be configured to generate, according to various embodiments of the present invention. Navigation system 100 may generate the GUI elements shown in Figure 2A in order to determine a promotion class on which the user of navigation system 100 wishes to capitalize. As shown, GUI element 200 expands to a GUI element 210 that lists a variety of exemplary promotion classes, including "discount" 211, "special offer" 212, "holiday" 213, and "liquidation" 214. Upon selection of a particular promotion class, GUI element 210 may expand based on the selected class.

When the user selects discount 211, navigation system 100 may then display GUI element 220, which lists discount levels 221, 222, and 223, corresponding to a 10% discount, 20% discount, and 30% discount, respectively. When the user selects special offer 212, navigation system 100 may then display GUI element 230, which lists special offers 231, 232, and 233, corresponding to a "buy 1 get 1 free" offer, a "cash back" offer, and a "free sample" offer, respectively. When the user selects holiday 213, navigation system 100 may then display GUI element 240, which lists holidays 241 and 242, corresponding to Christmas and New Year, respectively. When the user selects liquidation 214, navigation system 100 may then display GUI element 250, which lists liquidation events 251 and 252, corresponding to a "going out of business" event and a "year end clearance" event, respectively.

Navigation system 100 is configured to receive one or more selections from the user of navigation system 100 that reflect a promotion class and associated promotion details. The user of navigation system 100 could, for example, and without limitation, select a 10% discount promotion as well as a Christmas Holiday promotion, or simply select just one promotion type, such as a going out of business liquidation event. Navigation system 100 may then interact with the user to acquire a category of POI that the user wishes to visit, as described in greater detail below in conjunction with Figure 2B.

Figure 2B illustrates exemplary GUI elements that the navigation system of Figures 1A-1C may be configured to generate, according to various other embodiments of the present invention. Navigation system 100 may generate the GUI elements shown in Figure 2B in order to determine a POI category that the user of navigation system 100 wishes to visit. As shown, GUI element 260 expands to a GUI element 270 that lists a variety of POI categories, including "garment" 271, "electronics" 272, "cosmetics" 273, and "gifts" 274. Upon receiving a selection of a particular category or categories from the user, navigation system 100 then identifies POIs 160 that fall within the selected POI category or categories and offer the selected class or classes of promotion. Navigation system 100 may then generate a route that visits the identified POIs 160 in the fashion described above in conjunction with Figures 1A-1C. Alternatively, navigation system 100 may also simply display the identified POIs 160 without generating or displaying a route that visits those POIs.

Referring generally to Figures 2A-2B, persons skilled in the art will understand that the GUI elements shown in those figures are provided for exemplary purposes only to demonstrate possible techniques for acquiring promotion and POI-related preferences from the user of navigation system 100. The user could also provide the information discussed herein via text input, voice input, or any other technically approach to inputting data. In addition, various features of the aforementioned GUI elements may be omitted without departing from the essential scope and spirit of the present invention. For example, and without limitation, the GUI elements shown in Figure 2A may simply display a particular discount level at which the user wishes to shop. Alternatively, the GUI elements shown in Figure 2B could be omitted entirely, and the user could simply elect to shop at any category of POI 160 that offers a particular promotion. In addition, persons skilled in the art will understand that the GUI elements shown in Figures 2A-2B may be displayed to the user in any order, and, further, selections of those elements may be received in any order. For example, navigation system 100 may display the GUI elements shown in Figure 2B and then receive a selection from the user of a store category. Subsequently, navigation system 100 may display the GUI elements shown in Figure 2A and then receive selections of promotion class and associated details. Persons skilled in the art will recognize that the categories/elements shown in Figures 2A-2B are provided for illustration of the operation of navigation system 100, and that the categories may be different or modified according to one or more specific implementations of the invention.

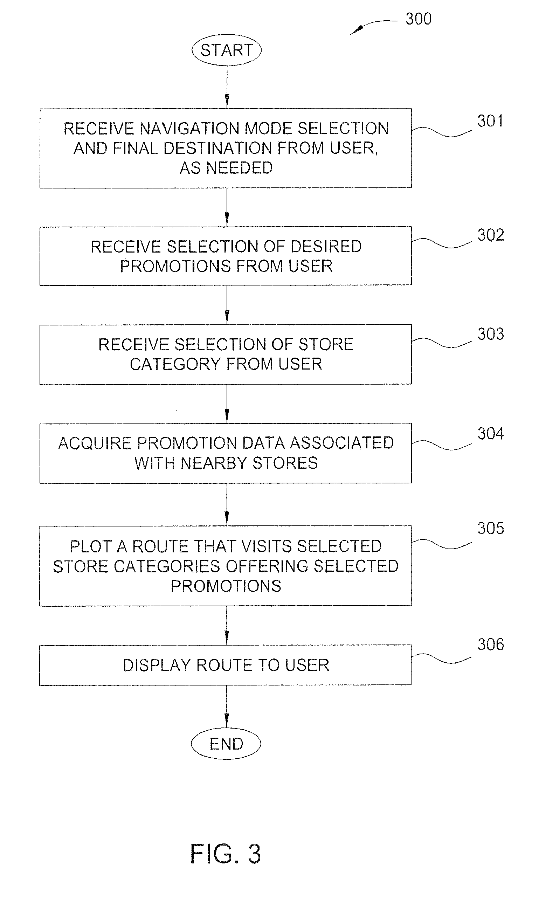

Although the functionality of navigation system 100 has been discussed thus far with reference to specific examples, the general functionality of that navigation system is also described below, in stepwise fashion, in conjunction with Figure 3.

Figure 3 is a flow diagram of method steps for plotting a route across different points of interest (POIs) offering specific promotions, according to various embodiments of the present invention. Although the method steps are described in conjunction with the systems of Figures 1A-1C, persons skilled in the art will understand that any system configured to perform the method steps, in any order, is within the scope of the present invention.

As shown, a method 300 begins at step 301, where navigation system 100 receives a navigation mode selection and final destination form the user, as needed. The navigation mode selection may indicate that the user wishes to visit various POIs 160 when traveling from initial position 130 to final destination 140, or, alternatively, that the user wishes to visit a circuit of POIs 160 and then return to initial position 130. In the former case, at step 301, navigation system 100 also receives data indicating the final destination. In embodiments of the invention where navigation system 100 does not generate route 120, navigation system 100 does not perform step 301.

At step 302, navigation system 100 receives from the user a selection of the class of promotions, and associated promotion details, on which the user wishes to capitalize. A promotion could be, for example, and without limitation, a 30% off discount, a "free sample" promotion, or a clearance event, among other possibilities.

At step 303, navigation system 100 receives a selection of a POI category where the user wishes to shop and, potentially, take advantage of the promotion(s) selected at step 302. In the context of this disclosure, a "POI" refers to a vendor of goods and/or services, such as a store or market, among other examples, and without limitation. A POI category could be "garment"-type POIs or "electronics"-type POIs, among other examples, and without limitation. In one embodiment, navigation system 100 may perform step 303 prior to performing step 302. For example, and without limitation, navigation system 100 receive a selection of POI category, then, subsequently, receive a selection of a class of promotion.

At step 304, navigation system 100 acquires promotion data associated with nearby POIs. Navigation system 100 may rely on cloud-based services to acquire promotion data. For example, and without limitation, navigation system 100 could access a web page associated with a given POI and parse text associated with the web page to identify various promotions offered by that POI.

At step 305, navigation system 100 plots a route that visits POIs that fall within the POI category or categories selected at step 303 and offer the promotion or promotions selected at step 302. The POIs disposed along the route generated at step 305 generally represent a subset of a candidate set of POIs that may be acquired at step 304. In embodiments of the invention where navigation system 100 does not generate route 120, navigation system 100 does not perform step 305.

At step 306, navigation system 100 displays the route to the user. Navigation system 100 may display a map to the user, such as that shown in Figures 1A-1C, or display a list of directions, among other possibilities. The user may then proceed along the route, e.g., via vehicle 110, on foot, or other means of traveling. In some embodiments, if the user is travelling using multiple modes of transportation, the system may show a route to arrive at each destination point using one of the multiple modes of transportation, as applicable. In embodiments of the invention where navigation system 100 does not generate route 120, navigation system 100 does not perform step 306, and instead simply displays POI 160 to user.

Navigation system 100 implements the method 300 to assist the user of navigation system 100 with locating bargains on items that the user wishes to purchase. With this approach, the user may efficiently traverse a vast shopping area and visit only the particular stores that offer the best value on the desired items. Accordingly, navigation system 100 may enable the user to save a considerable amount of time, money, and effort while shopping. In certain embodiments of the present invention, navigation system 100 may perform only steps 302, 303, and 304 and then display POIs 160 identified at step 304 to the user. In addition, navigation system 100 may perform steps 302, 303, and 304 to display a set of POIs 160 after generating and displaying route 120. For example, navigation system 100 could implement the method 300 to generate and display route 120 through a first set of POIs 160, then implement steps 302, 303, and 304, to display a second set of POIs 160.

An exemplary navigation system 100 configured to implement any of the aforementioned functionality is described in greater detail below in conjunction with Figure 4.

Figure 4 illustrates an implementation of navigation system 100 of Figures 1A-1C, according to various embodiments of the present invention. As shown, navigation system 100 includes a computing device 400 that is coupled to promotional data 410 and a navigation service 420 by a network 430. Computing device 400 includes a display screen 401, a processing unit 402, input/output (I/O) devices 403, and a memory unit 404 coupled together. Memory 404 includes a software application 405 and a database 406.

Computing device 400 may be a mobile computing device, such as a cell phone or tablet computer, as well a dedicated GPS navigation device. Display screen 401 may be a traditional liquid crystal display (LCD) screen or a touchscreen, among others. Processing unit 402 may be any technically feasible hardware unit configured to process data, including a central processing unit (CPU), and so forth. I/O devices 403 include devices capable of receiving input, devices capable of generating output, and devices capable of both receiving input and generating output. Memory unit 404 may be any storage device or combination of storage devices, including a random access memory (RAM) module or a hard disk, among others. Software application 405 includes program code that may be executed by processing unit 402 to perform any of the functionality of navigation system 100 discussed herein. Database 406 includes data that may be stored by software application 405, including user preferences, saved routes, bookmarked POIs, and so forth.

In operation, computing device 400 is configured to acquire information associated with POIs that the user of navigation system 100 may wish to visit from a cloud-based service that provides promotion data 410. Promotion data could be structured data generated by a cloud-based application programming interface (API) or unstructured data included in web pages associated with various POIs. Navigation system 100 is also configured to interact with navigation service 420 in order to plot routes that travel proximate to a set of POIs. Navigation service 420 may be a publicly accessible mapping service or a private service that is only available to the user of an instance of navigation system 100.

Persons skilled in the art will understand that the configuration of elements shown in Figure 4 is provided for exemplary purposes only to shown one possible implementation of navigation system 100. Other implementations are also possible, as those skilled in the art will readily recognize. However, any implementation of a navigation system capable of performing the techniques associated with navigation system 100 falls within the scope of the present invention.

In sum, a navigation system is configured to plot a route through a shopping area that visits various stores offering specific types of promotions. A user of the navigation system first selects a desired promotion, including a discount level, among other possibilities. Then, the user selects a category of store where the user wishes to shop. The navigation system then identifies nearby stores offering the desired promotion that fall within the selected category, and plots a route that visits each identified store. The route may traverse from the current location of the user to a final destination, or may represent a circuit with collocated starting and ending positions.

One of the many advantages of the disclosed techniques is that valuable promotions for desired items may be automatically located without requiring the user to physically hunt for those promotions. Further, if the user wishes to locate the best possible deal for a given item, the navigation system may automatically locate the best possible deal and then direct the user to the store offering that deal. The techniques described thus far may allow the user to navigate through a vast shopping area and to visit only the subset of stores that provide the best value on a set of desired items. Accordingly, the navigation system may save the user a considerable amount of time, money, and effort while shopping.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as compact disc read only memory (CD-ROM) disks readable by a CD-ROM drive, flash memory, read only memory (ROM) chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

The invention has been described above with reference to specific embodiments. Persons of ordinary skill in the art, however, will understand that various modifications and changes may be made thereto without departing from the broader spirit and scope of the invention as set forth in the appended claims. The foregoing description and drawings are, accordingly, to be regarded in an illustrative rather than a restrictive sense.

Therefore, the scope of embodiments of the present invention is set forth in the claims that follow.

## Claims

1. A computer-implemented method for directing a user to vendors that offer promotions, the method comprising:
receiving from the user a selection of a class of promotions;
determining a set of vendors offering promotions that fall within the class of promotions;
generating by a processor a set of instructions that direct the user along a route (120) that passes proximate to each vendor in the set of vendors; and
outputting the set of instructions to the user.

2. The computer-implemented method of claim 1, wherein determining the set of vendors further comprises:
receiving from the user a selection of a category of vendor; and
identifying one or more vendors that fall within the category of vendor to generate the set of vendors.

3. The computer-implemented method of claim 1 or 2, further comprising:
removing a first vendor from the set of vendors based on a user selection; and
adjusting the set of instructions to direct the user along an adjusted route that does not pass proximate to the first vendor.

4. The computer-implemented method ofany of the preceding claims, further comprising:
determining that the user has passed proximate to a first vendor in the set of vendors; and
outputting to the user a one or more promotions offered by the first vendor.

5. The computer-implemented method of any of the preceding claims, further comprising:
determining that a threshold amount of time has elapsed since the user passed proximate to any of the vendors in the set of vendors; and
prompting the user to determine whether the user is done following the set of instructions.

6. A non-transitory computer-readable medium that, when executed by a processing unit (402), causes the processing unit (402) to direct a user to vendors that offer promotions, by performing the steps of:
receiving input that reflects a selection of a first class of promotions from the user;
receiving input that reflects a selection of a second class of promotions from the user;
acquiring a set of vendors that offer promotions falling within the first class of promotions and the second class of promotions, respectively; and
outputting the set of vendors corresponding to each of the first class of promotions and the second class of promotions to the user.

7. The non-transitory computer-readable medium of claim 6, wherein the step of acquiring the set of vendors further comprises:
parsing data that is retrieved from a cloud-based data source and reflects vendors proximate to an area that the user currently occupies; and
filtering the data to identify vendors that offer promotions falling within at least one of the first class of promotions and the second class of promotions.

8. The non-transitory computer-readable medium of claim 7, wherein the cloud-based data source comprises a search engine configured to return a list of vendors associated with the area that the user currently occupies.

9. The non-transitory computer-readable medium of any of claims 6 to 8, wherein outputting the set of vendors comprises causing a display device (401) coupled to the processing unit (402) to show an indicator having a first attribute for each vendor in the set of vendors that is associated with the first class of vendors.

10. The non-transitory computer-readable medium of claim 9, wherein displaying the set of vendors further comprises causing the display device (401) to show an indicator having a second attribute for each vendor associated with the second class of vendors.

11. The non-transitory computer-readable medium of claim 10, wherein the first attribute comprises a first color and the second attribute comprises a second color.

12. The non-transitory computer-readable medium of any of claims 6 to 11, further comprising the steps of:
generating a set of navigation instructions that reflects a route that passes through one or more vendors in the set of vendors; and
outputting the set of navigation instructions to the user.

13. The non-transitory computer-readable medium of claim 12, wherein the route passes through vendors associated with the first promotion class, and further comprising the step of displaying the route to the user and displaying the vendors associated with the second promotion class to the user.

14. The non-transitory computer-readable medium of claim 12 or 13, wherein the route passes through vendors associated with the second promotion class, and further comprising the step of displaying the route to the user and displaying the vendors associated with the first promotion class to the user.

15. A system (100) configured to direct a user to vendors that offer promotions, the system comprising:
a processing unit (402) configured to:
receive from the user a selection of a class of promotions and one or more user preferences,
determine a set of vendors offering promotions based on the class of promotions and the one or more user preferences,
generate a set of instructions that directs the user along a route that passes proximate to each vendor in the set of vendors based on the one or more user preferences, and
output the set of instructions to the user.
